# EUROPEAN PATENT SPECIFICATION

(11) **EP 2 223 768 B1**
(45) Date of publication and mention of the grant of the patent: **06.05.2015**
(21) Application number: 10150204.5
(22) Date of filing: 07.01.2010
(51) Int. Cl.: B23K 20/10, B23K 20/233, B23K 26/22, B23K 26/32, F28D 1/047, F28F 1/22, F25B 39/02, B23K 103/10, B23K 101/14

(54) **Method for making refrigerator evaporating devices including an aluminium coil arrangement coupled to an aluminium blade element**
Verfahren zur Herstellung von Kühlschrankverdampfern, die eine mit einer Folie aus Aluminium verbundene Rohrschlange aus Alumium beinhaltet
Procédé de fabrication de dispositifs d'évaporation pour réfrigérateurs avec serpentin en aluminium connecté à une lame en aluminium

(30) Priority: 26.02.2009 IT MI20090277; 30.04.2009 IT MI20090752
(43) Date of publication of application: 01.09.2010
(73) Proprietor: Montecucco, Marta, 27038 Robbio (PAVIA) (IT); Montecucco, Maddalena, 27038 Robbio (PAVIA) (IT); Baldi, Enrico, 27038 Robbio (PAVIA) (IT)
(72) Inventor: Montecucco, Marta, 27038 Robbio (PAVIA) (IT); Montecucco, Maddalena, 27038 Robbio (PAVIA) (IT); Baldi, Enrico, 27038 Robbio (PAVIA) (IT)
(74) Representative: Cicogna, Franco

(56) References cited:
- EP-A- 1 906 113
- GB-A- 2 376 513
- GB-A- 2 421 457
- US-A- 3 217 957

## Description

### BACKGROUND OF THE INVENTION

The present invention relates to a method for making refrigerator evaporating devices including an aluminium coil arrangement coupled to an aluminium blade element according to the preamble of claim 1. GB 2 421 457 A discloses such a method.

As is known, refrigerators and the like evaporators conventionally comprise an aluminium blade element, on a face of which an aluminium coil is arranged.

To connect the blade element and coil, are at present used either mechanical clamping or glueing methods, in which glueing method, the coil is glued on the blade element by an adhesive sheet element.

Both the above coupling methods have the main drawback that they provide an unsatisfactory uneven coupling of the aluminium coil to the aluminium blade element.

In fact, because of the resilient or elastic properties of their aluminium material, the coil tends to detach from the aluminium blade or plate, thereby providing an inefficient heat transmission.

Actually, the thermal transmission is unsatisfactory and uneven on industrial scale pieces and, as the thus made evaporator is glued on the back of the refrigerating cell, ice tends to form at that portion at which the blade or plate and coil ore not perfectly coupled, thereby tending to increase the probability of detaching the coil from the plate, and negatively affecting the refrigerator performance.

GB 2 421 457 A discloses a heat exchanger having a metal tube attached to a metal plate by a plurality of laser spot welds that extend through a portion of the thickness of the plate.

### SUMMARY OF THE INVENTION

Accordingly, the aim of the present invention is to overcome the above mentioned drawbacks, by providing a method for making refrigerator evaporators including an aluminium coil connected to an aluminium blade or plate element, allowing to quickly and easily provide a continuous coupling between the coil and blade element, thereby in turn optimizing the thermal conduction of the refrigerator.

Within the scope of the above mentioned aim, a main object of the invention is to provide such a method allowing to achieve a very tight or intimate contact between the coil and blade element, to in turn allow the connection to be performed in an automatic manner and with an even connecting quality.

Another object of the present invention is to provide such a method which, owing to its specifically designed features, is very reliable and safe in operation.

Yet another object of the present invention is to provide such a method which can be quickly and easily carried out and which, moreover, is very competitive from a mere economic standpoint.

The above mentioned aim and objects, as well as yet other objects, which will become more apparent hereinafter, are achieved by a method for making refrigerator evaporating devices as claimed in the appended claims.

### BRIEF DESCRIPTION OF THE DRAWINGS

Further characteristics and advantages of the present invention will become more apparent hereinafter from the following detailed disclosure of an embodiment of a method for making refrigerator evaporators including an aluminium coil coupled to an aluminium blade or plate element, which is illustrated, by way of an indicative, but not limitative, example in the accompanying drawings, where:

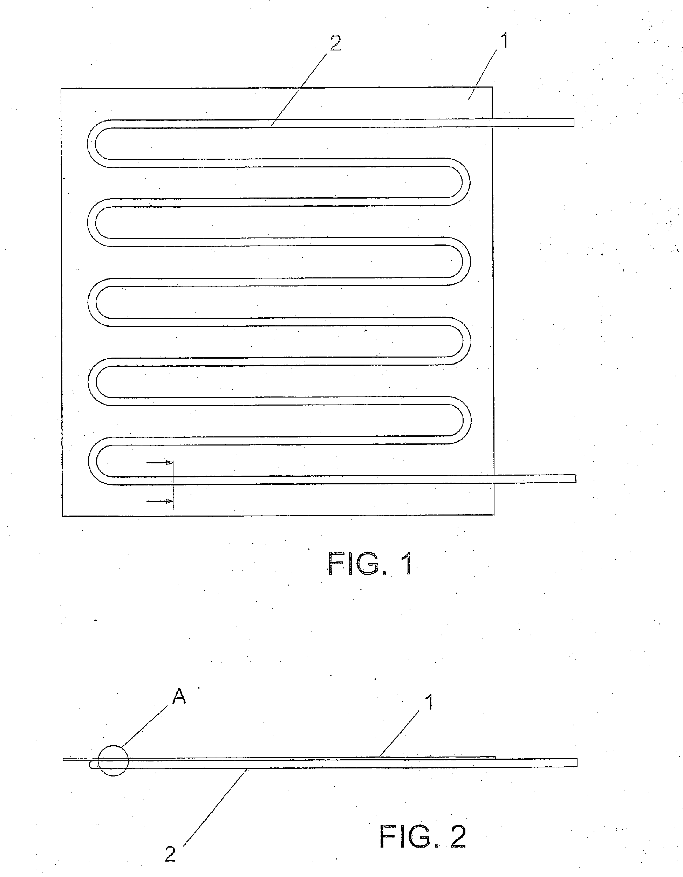

Figure 1 is a schematic top plan view of a refrigerator evaporator;
Figure 2 is an elevation view of the refrigerator evaporator shown in figure 1;

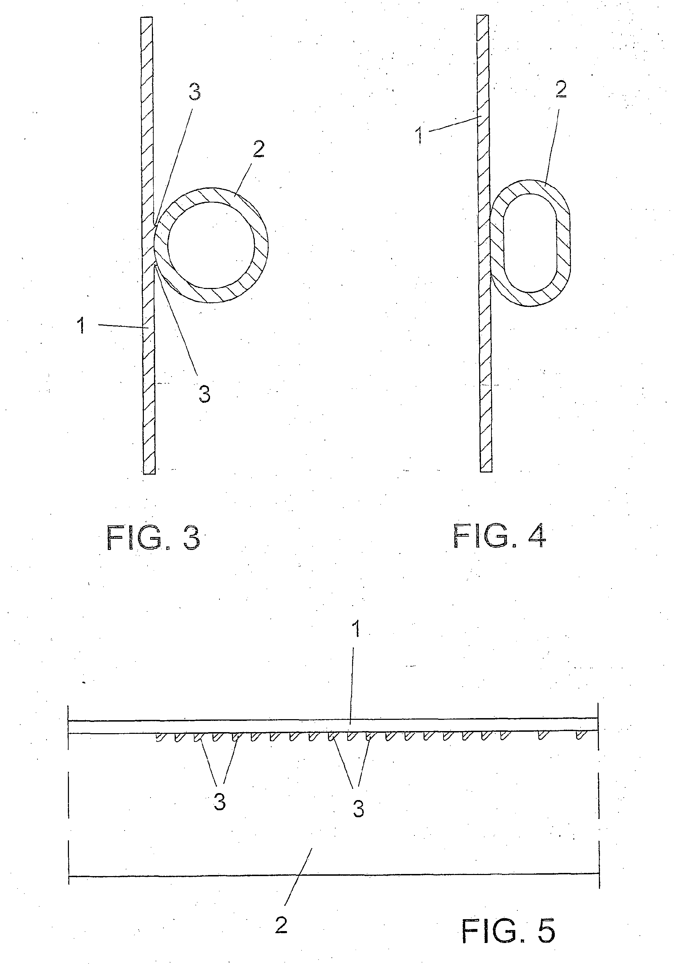

Figure 3 is a cross-sectional view substantially taken along the cross-line, II-II of figure 1;
Figure 4 is a further cross-sectional view substantially taken along the section line III-III of figure 1, with an oval cross-section coil; and
Figure 5 shows, on an enlarged scale, the detail A of figure 2.

### DESCRIPTION OF THE PREFERRED EMBODIMENT

With reference to the number references of the above mentioned figures, the method according to the invention for making refrigerator evaporators including an aluminium coil coupled to an aluminium blade or plate element comprises the step of providing an aluminium blade element 1, arranging an aluminium coil 2 thereon, said coil having either a circular or oval cross-section, or any other desired cross-section configuration.

In the accompanying drawings, all the provided cross-sections have been generally indicated by the reference number 2.

To carry out the coupling step, a laser beam is herein used for providing a melting welding operation of the part to be coupled, in a preferred embodiment the coupling being made by causing the regions to be coupled to partially melt, without using any filling-in material.

In particular, the coupling of the blade element 1 and coil 2 is carried by a welding process or method providing to use a pulse laser adapted to perform a point or spot 3 welding operation, by applying a very high power concentrated light beam on the aluminium blade element, thereby causing a small surface portion of the aluminium coil 2 to be melted, thereby a projection of the blade element 1 will provide the single welding point or spot.

Said metal welding spots will provide, in addition to the desired mechanical coupling, also a conductive heat transmission.

A further convective heat transmission is moreover provided because of the proximity and contacting of the aluminium coil and the aluminium blade or plate element.

In this connection, it should be pointed out that, for providing said coupling, it would be also possible to use an ultrasound welding method, which is not part of the present invention, in particular an automatic constant quality welding method.

Thus, the coupling of the coil to the blade or plate will be provided through the overall extension of the junction, and the thermal transmission will occur through the welding line, thereby preventing ice susceptible to detach the coil 2 from the blade element 1 from forming.

For performing the welding method it is possible to use ultrasounds, or acoustic waves constituted by mechanical vibrations which are transmitted, in an easy manner, through metal materials.

The ultrasounds are generated by ultrasound transducers operating in a frequency range from 20 KHz to several MHz.

In performing the ultrasound method, the transducer will be mounted on a sound probe, adapted to directly transmit the ultrasound waves to the parts to be coupled.

In welding the blade element on the coil, the sound probe or "sonotrode" will be of a rotary type, thereby rolling along the surface at the contact line between the tube 2 and blade element 1.

The two metal surfaces are intimately held under pressure, whereby a sound wave will be propagated in a direction perpendicular to the contact surface.

Accordingly, because of the vibration regimen, chemical bonds will be generated between the aluminium material atoms, thereby providing a firm weldment coupling.

In such a welding method, upward surface roughness hard projecting bumps will provide small deformations to increase the contact area to in turn provide a mechanical clinched coupling between the coil and blade element.

From the above disclosure it should be apparent that the invention fully achieves the intended aim and objects.

In particular, the fact is to be pointed out that the invention provides a laser welding method allowing to perform an optimum continuous connection, with an increased mechanical adhesion and thermal transmission property.

## Claims

1. A method for making refrigerator evaporating devices including an aluminium coil arrangement coupled to an aluminium blade element (1), said method comprising a step of arranging an aluminium coil (2) on an aluminium blade element (1) and performing a laser welding operation by using a pulse laser that sends a very high energy concentrated light beam on said aluminium blade element (1), providing a point by point welding; said method being **characterized in that** said very high energy concentrated light beam on said aluminium blade element (1) causes a small surface portion of said aluminium coil (2) to be melted, thereby a projection of said blade element providing a single welding spot (3); said method further comprising providing a plurality of said spots (3) that conductively transmit heat and provide a mechanical coupling.

2. A method, according to claim 1, **characterized in that** it comprises the use of aluminium sheets with an adhesive material applied on a side thereof opposite to the welding side.

## Patentansprüche

1. Verfahren zum Herstellen von Kühlschrankverdampfungsvorrichtungen, die eine mit einem Aluminiumfolienelement (1) verbundene Aluminiumrohrschlangenanordnung umfassen, wobei das Verfahren umfasst: einen Schritt des Anordnens einer Aluminiumrohrschlange (2) an einem Aluminiumfolienelement (1) und des Durchführens eines Laserschweißvorgangs mittels eines Impulslasers, der einen sehr hochenergetischen konzentrierten Lichtstrahl auf das Aluminiumfolienelement (1) abgibt, welcher für eine punktweise Schweißung sorgt; wobei das Verfahren **dadurch gekennzeichnet ist, dass** der sehr hochenergetische konzentrierte Lichtstrahl auf dem Aluminiumfolienelement (1) bewirkt, dass ein kleiner Oberflächenabschnitt der Aluminiumrohrschlange (2) geschmolzen wird, wodurch ein Vorsprung des Folienelements einen einzelnen Schweißpunkt (3) vorsieht; wobei das Verfahren ferner das Vorsehen mehrerer dieser Punkte (3) umfasst, welche leitend Wärme übertragen und eine mechanische Verbindung vorsehen.

2. Verfahren nach Anspruch 1, **dadurch gekennzeichnet, dass** es die Verwendung von Aluminiumblechen mit einem Klebstoff umfasst, der auf eine Seite davon, die der Schweißungsseite entgegengesetzt ist, aufgebracht wird.

## Revendications

1. Procédé de fabrication de dispositifs d'évaporation pour réfrigérateurs avec serpentin en aluminium connecté à une lame en aluminium (1), le dit procédé comprenant une étape d'agencement d'un serpentin en aluminium (2) sur une lame en aluminium (1) et l'exécution de l'opération de soudage au laser en utilisant un laser à impulsions qui envoie un faisceau lumineux à très forte concentration en énergie sur la lame en aluminium (1), fournissant un soudage par point ; le dit procédé étant **caractérisé en ce que** le faisceau lumineux à très forte concentration en énergie sur la lame en aluminium (1) fait fondre une petite partie de surface du serpentin en aluminium (2), une saillie de la lame fournissant un seul point de soudure (3) ; le dit procédé comprenant en outre de fournir une pluralité des points (3) qui transmettent la chaleur par conduction et fournissent un couplage mécanique.

2. Procédé selon la revendication 1, **caractérisé en ce qu'**il comprend l'utilisation de films d'aluminium avec un matériau adhésif appliqué sur un côté de ceux-ci opposé au coté de soudure.
